## Europäisches Patentamt
## European Patent Office
## Office européen des brevets

(19)

(11) Numéro de publication: **0 085 633**
**B1**

(12)

# FASCICULE DE BREVET EUROPEEN

(45) Date de publication du fascicule du brevet:
**18.12.85**

(51) Int. Cl.⁴: **H 04 Q 3/52**, H 04 B 9/00

(21) Numéro de dépôt: **83400230.5**

(22) Date de dépôt: **03.02.83**

(54) **Réseau de commutation opto-éléctronique.**

(30) Priorité: **03.02.82 FR 8201737**

(43) Date de publication de la demande:
**10.08.83 Bulletin 83/32**

(45) Mention de la délivrance du brevet:
**18.12.85 Bulletin 85/51**

(84) Etats contractants désignés:
**DE GB NL SE**

(56) Documents cités:
**WO - A - 80/01028**
**GB - A - 1 160 546**
**US - A - 3 293 357**

(73) Titulaire: **Rozenwaig, Boris, 8, rue Redouté,
F-92360 Meudon-La-Foret (FR)**

(72) Inventeur: **Rozenwaig, Boris, 8, rue Redouté,
F-92360 Meudon-La-Foret (FR)**

(74) Mandataire: **Martinet & Lapoux, 62, rue des Mathurins,
F-75008 Paris (FR)**

**Description**

La présente invention concerne un réseau de commutation opto-électronique destiné à commuter des signaux optiques.

On connaît, par la demande de brevet PCT publiée WO-A-80/01028 et par le brevet Etats-Unis d'Amérique US-A-4 437 190 correspondant à ladite demande, des réseaux de commutation opto-électroniques pour commuter des signaux transmis par des faisceaux lumineux modulés optiquement. Ces réseaux de commutation comprennent:

un tableau émetteur formé d'une pluralité d'unités d'émission constituées chacune par une source lumineuse, ces sources lumineuses étant reliées respectivement à des lignes entrantes et disposées dans le tableau émetteur sous forme matricielle;

un tableau récepteur formé d'une pluralité d'unités de réception reliées chacune à une liaison sortante et constituées chacune par une pluralité de détecteurs opto-électroniques, ces détecteurs opto-électroniques étant chacun commutables sur la ligne sortante et disposés dans l'unité de réception sous forme matricielle; et

des moyens optiques projettant l'image du tableau émetteur sur chacune des unités de réception de façon que les images de sources lumineuses coïncident avec les détecteurs opto-électroniques des unités de réception.

En désignant par A, B, C, D, ... à la fois des abonnés réliés au réseau de commutation par des lignes entrantes et sortantes, les sources lumineuses et les unités de réception correspondant à ces abonnés et en désignant par a, b, c, d, ... les détecteurs opto-électroniques de chaque unité de réception, tous les détecteurs a à d de l'unité de réception A sont reliés sélectivement à l'abonné A, tous les détecteurs a à d de l'unité de réception B sont reliés sélectivement à l'abonné B, tous les détecteurs a à d de l'unite de réception C sont reliés sélectivement à l'abonné C et tous les détecteurs a à d de l'unité de réception D sont reliés sélectivement à l'abonné D. Une commutation bilatérale entre les abonnés A et B passe dans un sens par la source A et le détecteur opto-électronique a de l'unité de réception B et dans l'autre sens par la source B et le détecteur opto-électronique b de l'unité de réception A.

Le tableau émetteur du réseau de commutation opto-électronique de l'art antérieur comprend des sources additionnelles reliées à des générateurs de tonalité et à des générateurs de numérotation. Les unités de réception comprennent des détecteurs opto-électroniques additionnels correspondant à ces sources et qui coïncident avec les images desdites sources additionnelles à travers les moyens optiques. Enfin, le tableau récepteur comprend une unité de réception additionnelle dite fonctionnelle reliée à une unité centrale de commande.

Grâce à l'unité de réception fonctionnelle, l'unité centrale de commande peut effectuer la supervision des sources du tableau émetteur en balayant les détecteurs opto-électroniques de l'unité de réception fonctionnelle et en tenant compte qu'à une source du tableau émetteur illuminée correspond un détecteur opto-électronique actif.

Ainsi qu'on le verra dans un rappel de l'art antérieur qui sera fait ultérieurement, la connexion dans une unité de réception d'un détecteur donné a à d à la ligne de sortie de cette unité de réception se fait localement à l'échelon de l'unité de réception elle-même sans intervention de l'unité centrale de commande. Celle-ci n'a donc pas la supervision des détecteurs opto-électroniques des unités de réception comme elle a la supervision des sources du tableau émetteur.

L'objet principal de la présente invention est de permettre à l'unité centrale de commande d'avoir la supervision des unités de réception.

Pour ce faire, le réseau de commutation opto-électronique comprend un tableau émetteur formé d'une pluralité d'unités d'émission, consistant chacune en une source de lumière, lesdites sources de lumière étant connectées respectivement à des lignes d'abonné entrantes et étant disposées sous forme de matrice dans ledit tableau émetteur; un tableau récepteur formé d'une pluralité d'unités de réception, consistant chacune en une pluralité de cellules opto-électroniques, lesdites cellules étant sélectivement connectables à des lignes d'abonné sortantes et étant disposées sous forme de matrice dans ladite unité de réception; un système optique adapté pour projeter l'image du tableau émetteur sur les unités de réception et amener, dans chaque unité de réception, les images des sources du tableau émetteur en coïncidence avec les cellules opto-électroniques desdites unités de réception, une cellule opto-électronique étant ainsi activée par une source de lumière illuminée; et il est caractérisé en ce qu'il comprend en outre, dans chaque unité de réception des moyens pour illuminer les unités de réception quand une de leurs cellules opto-électroniques est activée; et une unité de supervision composée de cellules opto-électroniques sur laquelle sont projetées les unités de réception.

L'invention va maintenant être décrite en détail en relation avec les dessins annexés dans lesquels:

la figure 1 représente un réseau de commutation opto-électronique de l'art antérieur;

la figure 2 représente un réseau de commutation opto-électronique conforme à l'invention;

la figure 3 représente une unité de réception lumineuse dans l'état actif; et

la figure 4 représente un réseau de commutation opto-électronique conforme à l'invention dans lequel le tableau récepteur est divisé en plusieurs parties.

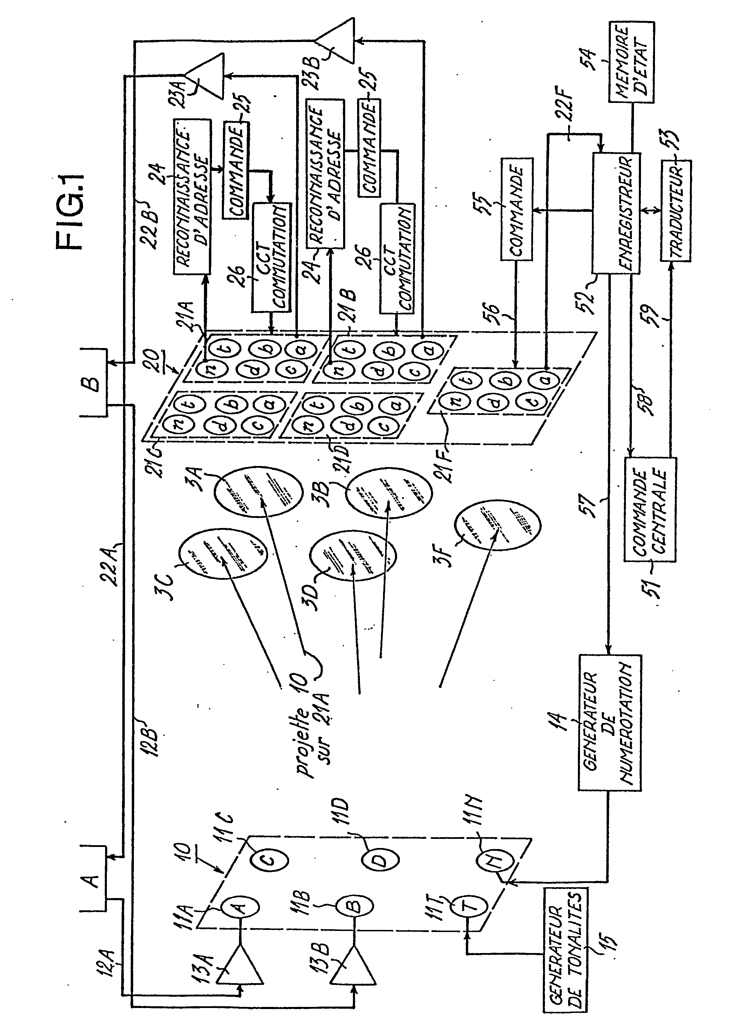

En se référant à la figure 1, les lignes d'abonné entrantes 12 et sortantes 22 sont des fibres optiques ou des lignes coaxiales. Les unités d'émission (sources lumineuses) 11 du tableau émetteur 10 sont des transducteurs opto-électroniques, par exemple des diodes électroluminescentes disposées en matrice. Le tableau récepteur 20 est constitué par une pluralité d'unités de réception 21 à multicellules qui sont des matrices de photodiodes à accès aléatoire. Chaque ligne d'abonné est donc connectée par une ligne entrante 12 à une diode électroluminescente 11 et par une ligne sortante 22 à une matrice de photodiodes 21. Les abonnés A et B sont par exemple connectés respectivement aux sources 11A et 11B par l'intermédiaire des lignes entrantes 12A et 12B et d'amplificateurs 13A et 13B. Les abonnés A et B sont aussi connectés respectivement aux unités de réception 21A et 21B par l'intermédiaire des lignes sortantes 22A et 22B et des amplificateurs 23A et 23B.

Chaque unité de réception 21 est équipée d'un objectif 3 qui projette sur elle l'image du tableau émetteur 10. Dans celui-ci, les sources de lumière 11 sont disposées de telle sorte que l'image de chaque source se projette sur une cellule occupant le même emplacement dans toutes les unités de réception 21. Autrement dit, l'image de la source A est projetée sur la cellule a de toutes les unités de réception 21, l'image de la source B est projetée sur la cellule b de toutes les unités de réception 21, etc.

Le tableau émetteur 10 comporte en outre les organes supplémentaires suivants:

— au moins une diode électroluminescente 11T chargée d'émettre des signaux lumineux de tonalité;

— au moins une diode électroluminescente 11N chargée d'émettre des signaux lumineux de numérotation. Les diodes électroluminescentes 11T et 11N correspondent à des réceptrices conjuguées t et n dans chaque unité de réception 21. Quant au récepteur 20, il comporte en outre une unité de réception fonctionnelle 21F dont le rôle va être rappelé. Les photodiodes de l'unité de réception 21F sont optiquement conjuguées avec les sources du tableau émetteur par l'intermédiaire d'un objectif 3F.

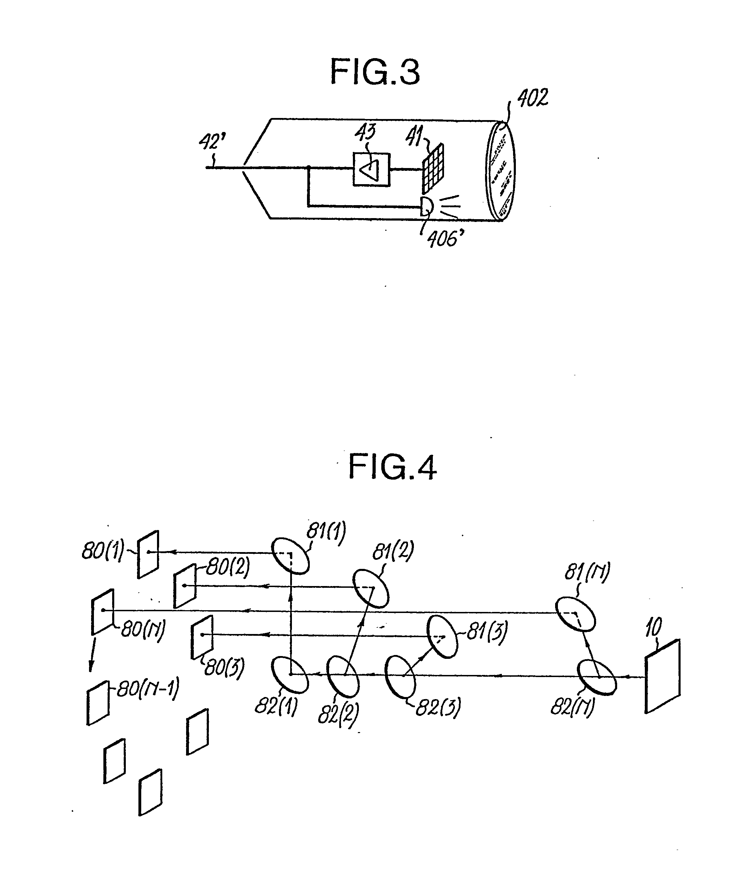

Dans chaque unité de réception 21, la cellule n est reliée à un circuit de reconnaissance d'adresse 24. Ce circuit de reconnaissance d'adresse 24 est relié à un circuit de commande 25, lui même relié à un circuit de commutation 26. Le circuit 24 lit l'adresse reçue par la cellule n et le circuit 25 recevant cette adresse, envoie des signaux de commande sur un bus de lignes et un bus de colonnes de la matrice de photodiodes 21. Le circuit 26 est décrit dans la figure 4 du brevet précité. Il provoque la connexion de l'une des cellules a, b, c, d, ... à la ligne sortante 22.

Le réseau de commutation opto-électronique de la figure 1 comporte enfin comme il est habituel, une unité centrale de commande 51, un enregistreur 52, un traducteur 53 et une mémoire d'état 54. L'enregistreur 52 délivre à l'unité de réception fonctionnelle 21F, par l'intermédiaire du circuit de commande 55 et d'une liaison 56, des impulsions de balayage permettant de commuter successivement chaque photodiode de l'unité de réception 21F sur sa ligne de sortie 22F et d'effectuer ainsi une exploration cyclique des sources 11 du tableau émetteur 10. Les signaux résultant de cette exploration sont retransmis par la liaison 22F à l'enregistreur 52 pour lui permettre:

a) de détecter les évenements de la communication (nouvel appel, raccrochage) par comparaison de l'état présent de la ligne d'abonné avec l'état antérieur mémorisé par la mémoire 54,

b) d'enregistrer les signaux de numérotation émis par l'abonné.

L'enregistreur 52 dispose alors des informations nécessaires pour établir ou interrompre une communication. Il peut pour cela:

a) faire appel au traducteur 53 pour connaître la correspondance entre un numéro demandé et une adresse physique (c'est-à-dire une adresse interne au réseau de commutation),

b) commander le générateur de numérotation 14 (auquel il est connecté par une liaison 57),

c) enfin délivrer à l'unité de commande centrale 51, par une liaison 58, des informations qui permettent nottamment à ladite unité de superviser le fonctionnement du réseau de commutation et de taxer le demandeur en fin de commutation.

On va résumer ci-après le fonctionnement du réseau de commutation de la figure 1 à l'occasion d'une communication dans laquelle l'abonné A est le demandeur et l'abonné B est le demandé. On dénommera «ensemble récepteur» l'ensemble constitué par une unité de réception 21, sa commande 25, son circuit de reconnaissance d'adresse 24 et son circuit de commutation 26.

D'une façon générale, le tableau émetteur 10 émet par sa source N, des paires d'adresses comprenant soit l'adresse d'un abonné A, B, C, D, ..., et l'adresse d'un générateur de tonalités T, soit l'adresse des deux abonnés.

Si par exemple le tableau émetteur émet «adresse de A + adresse de B», l'ensemble récepteur 21A reconnaît l'adresse de A et commute la cellule b de 21A à la ligne de sortie 22A et l'ensemble récepteur 21B reconnaît l'adresse de B et commute la cellule a de 21B à la ligne de sortie 22B.

Si par exemple le tableau émetteur émet «adresse de A + adresse de la source de tonalités T», l'ensemble récepteur 21A reconnaît l'adresse de A et commute la cellule t de 21A à la ligne sortante 22A. L'abonné A reçoit donc la tonalité émise.

a) A décroche et sa source 11A s'illumine;

b) l'enregistreur 52, constatant au cours de son exploration un changement d'état de la photodiode a de l'unité de réception 21F par comparaison avec son état antérieur mémorisé dans la mémoire 54, enregistre l'événement (nouvel appel) et provoque l'émission par le générateur 14 commandant la source 11N, d'un couple de signaux «adresse de A - adresse d'un générateur de tonalité d'invitation à numéroter», la deuxième adresse étant par exemple celle d'une des sources 11T;

c) l'unité de réception 21A qui, par son circuit de reconnaissance d'adresse 24 reconnaît l'adresse de A dans le couple de signaux reçus par sa photodiode n, commute la diode t adéquate sur la liaison 22A;

d) l'abonné A reçoit donc le signal d'invitation à numéroter et forme le numéro de B sur son poste;

e) l'enregistreur 52 en attente d'une numérotation lorsqu'il explore cycliquement l'abonné A (photodiode a de l'unité de réception 21F) enregistre le numéro de B formé par A, provoque l'émission par le générateur 14 et la source 11N d'un couple «adresse A - adresse zéro» dès réception du premier chiffre de numérotation pour interrompre l'envoi de la tonalité d'invitation a numéroter, consulte après enregistrement le traducteur 53 pour en déduire l'adresse de B, vérifie si B est libre et, dans l'affirmative, provoque l'émission par le générateur 14 et la source 11N d'un couple «adresse de B - adresse du générateur de sonnerie» puis d'un couple «adresse de A - adresse du générateur de tonalité de retour d'appel». Pour simplifier, un seul de ces générateurs 15 et de leur source associée 11T est représenté sur la figure 1;

f) l'unité de réception 21B se reconnaît à la lecture de l'adresse de B et se commute sur la photodiode t appropriée de sonnerie;

g) l'unité de réception 21A se reconnaît et se commute sur la photodiode t appropriée de retour d'appel;

h) lorsque B décroche, l'enregistreur 52, qui poursuit l'exploration séquentielle du tableau émetteur 10 grâce à son unité de réception fonctionnelle 21F, détecte le passage de la source 11B de l'état de repos à l'état actif, est informé par sa mémoire d'état 54 que B répond à l'appel, provoque l'émission par le générateur 14 et la source 11N d'un couple «adresse de B - adresse de A» et fournit à la commande centrale 51 les informations nécessaires à la taxation;

i) l'unité de réception 21A se reconnaît et se commute sur la source 11b tandis que l'unité de réception 21B se reconnaît et se commute sur la source 11A;

j) lorsqu'un abonné (par exemple A) raccroche, l'enregistreur 52 détecte par son unité de réception fonctionnelle 21F le passage de la source A de l'état actif à l'état de repos, provoque par le générateur 14 et la source 11N associée l'émission du couple «adresse de A - adresse zéro» puis l'émission du couple «adresse de B - adresse d'un générateur de tonalité d'invitation a numéroter (ou de communication interrompue)» et avise la commande centrale 51 de la fin de communication;

k) l'unité de réception 21A se reconnaît et interrompt la liaison optique avec la source 11B;

l) l'unité de réception 21B se reconnaît et se commute sur la source 11N (invitation à numéroter); B peut alors soit former un numéro d'appel, soit raccrocher.

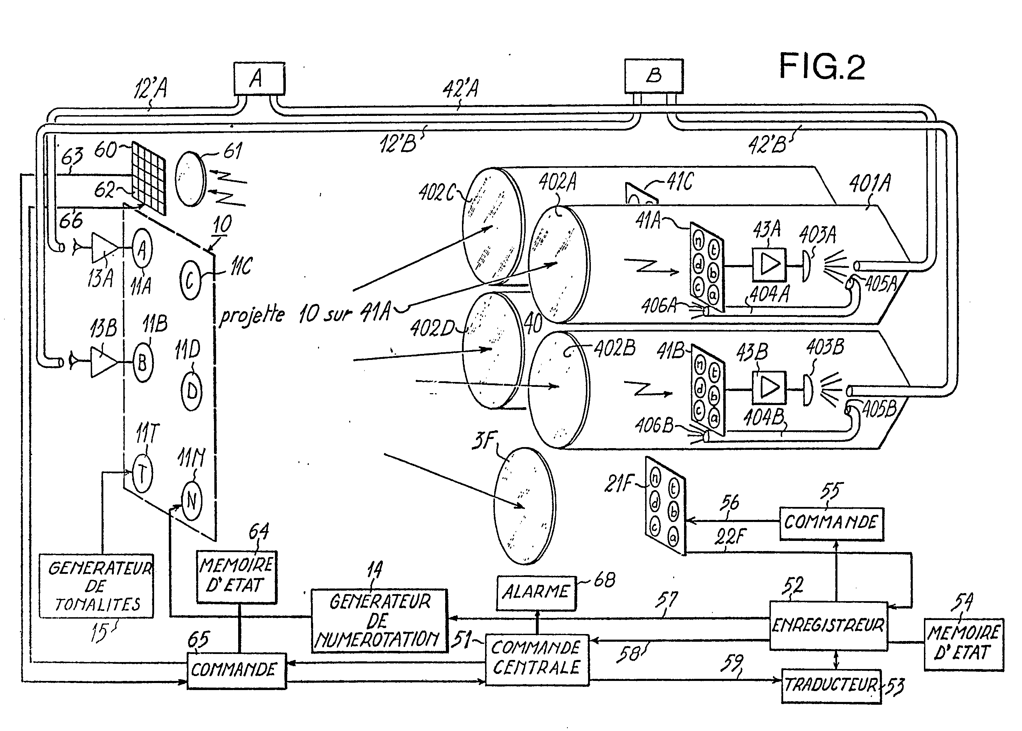

On retrouve sur la figure 2 qui représente le réseau de commutation de l'invention le tableau émetteur 10, les unités d'émission 11 et les lignes d'abonnés 12 aboutissant à ces unités d'émission. Les lignes d'abonné sont des fibres optiques ou des conducteurs métalliques.

Le tableau récepteur est désigné par le numéro de référence 40. Chacune des unités de réception à multicellules 41 est enclose dans un corps de viseur 401 muni de l'optique 402 de projection. Le corps de viseur enclôt aussi un injecteur de lumière 403 couplé avec la fibre optique sortante 42. Un amplificateur 43 connecté à la sortie de l'unité de réception 41 alimente l'injecteur de lumière 403.

Les circuits 24, 25 et 26 de la figure 1 qui forment, avec les unités de réception, les ensembles récepteurs, ne sont pas représentés sur la figure 2 mais il doit être entendu qu'il sont associés avec les unités de réception 41 de la figure 2 comme ils l'étaient avec les unités de réception 21 de la figure 1.

Les moyens de retransmission optique associés à chaque unité de réception sont constitués d'un guide d'onde lumineux ou fibre optique 404 dont l'extrémité 405 recueille une fraction du flux lumineux émis par l'injecteur de lumière 403 et perdu dans le couplage avec la fibre optique 42 et dont l'extrémité 406 restitue cette fraction de flux dans un plan voisin de celui des photodiodes de l'unité de réception 41. La fibre optique 404 peut être remplacée tout simplement par le corps du viseur prévu réfléchissant à cet effet.

Ainsi, lorsqu'une unité de réception 41 est commandée par la commande 25 pour commuter l'une de ses cellules sur la ligne sortante 42, la commutation, une fois effectuée, est visible par la source lumineuse que constitue l'extrémité 406, ce qui donne l'assurance que la diode électroluminescente 403 transmet bien le signal lumineux d'information à ladite liaison 42.

L'extinction de la source 406 peut signaler soit que l'unité de réception 41 n'est pas mise en jeu dans une commutation, soit qu'elle est défaillante, soit encore que l'amplificateur 43 ou l'injecteur 403 sont défaillants.

La surveillance est effectuée au moyen dune unité de réception à multicellules 60 munie d'une optique 61 et disposée dans le plan du tableau émetteur 10.

Cette unité de réception comporte autant de cellules qu'il existe d'unités de réception 41 dans le tableau récepteur 40. L'objectif 402 fait converger les rayons issus de la source 406 vers l'unité de réception 60, l'extrémité 406 étant centrée à cet effet sur l'image de l'unité de réception 60 produite par l'optique 402. L'objectif 61 forme l'image du tableau récepteur 40 sur le récepteur 60, dirigeant ainsi les rayons émis par une source vers la cellule 62 correspondante. Un circuit commande 65 délivre par l'intermédiaire d'une liaison de commande 66, des ordres de commutation au récepteur 60 pour l'exploration successive des cellules 62. Celles-ci sont commutées tour à tour sur une liaison 63 qui transmet successivement les signaux reçus par lesdites cellules à la commande 65. La commande 65 peut ainsi superviser le bon fonctionnement des équipements du tableau récepteur, de même que la commande 55 (fig. 1) servait à la supervision du bon fonctionnement des équipements du tableau émetteur.

L'unité de commande 65 est reliée à une mémoire d'état 64 qui lui permet d'observer tous les changements d'état des unités de réception (par exemple réception d'un signal sur une cellule alors que la mémoire d'état 64 consultée indique l'absence de signal sur cette cellule lors de la précédente exploration) et d'en informer la commande centrale 51. Si ce changement d'état ne correspond pas à un événement normal (par exemple à l'établissement ou à la rupture d'une communication), l'unité de commande centrale 51 le signale à un dispositif d'alarme 68.

Dans le cas de liaisons sortantes électriques et non plus optiques, seule la partie aval à l'amplificateur 43 compris dans chaque unité de réception est modifiée dans le schéma de la figure 2. La figure 3 montre les modifications apportées. L'injecteur de lumière 403 est supprimé, la liaison électrique sortante 42', directement reliée à l'amplificateur 43 se substitue à la fibre optique 42, et une source de lumière 406' (diode électroluminescente) reliée à la liaison électrique sortante 42' se substitue à la fibre optique 404 à l'emplacement de l'extrémité 406.

En se référant maintenant à la figure 4 qui n'est qu'un exemple d'utilisation de moyens semi-réfléchissants, au tableau émetteur 10 font face N sous-tableau récepteurs $80_1$ à $80_N$ disposés en étoile tout en restant parallèles entre eux avec un pas angulaire égal ou inférieur à $2\pi/N$ radians. Chacun de ces tableaux est illuminé par l'intermédiaire d'un réflecteur à réflexion totale, respectivement $81_1$ à $81_N$ centré sur l'axe dudit tableau et par l'intermédiaire d'un réflecteur $82_1$ à $82_N$ centré sur l'axe optique du système et parallèle au réflecteur 81 correspondant. Tous les réflecteurs 82 sont semi-transparents à l'exception du réflecteur $82_1$ qui est à réflexion totale puisqu'il reçoit la dernière fraction du flux lumineux du tableau émetteur 10. Chacun des réflecteurs 82 est incliné sur l'axe du tableau émetteur à 45°, en sorte que l'image du réflecteur associé 81 à travers le réflecteur 82 considéré soit centrée sur l'axe du tableau émetteur 10. Le parallélisme de réflecteurs associés assure le parallélisme des images du tableau émetteur.

Les coefficients de réflexion et de transmissions de N-1 réflecteurs $82_2$ à $82_N$ sont tels que les N sous-tableau récepteurs $80_1$ à $80_N$ reçoivent chacun une fraction F/N du flux lumineux F délivré par le tableau émetteur 10. On constate immédiatement que les N sous-tableaux récepteurs 80, s'ils sont substitués à un tableau récepteur unique comportant C récepteurs multicellules, comportent chacun C/N récepteurs et que le rapport de leurs dimensions à celles de ce tableau unique est de $1/\sqrt{N}$.

## Revendications

1. Réseau de commutation opto-électronique comprenant un tableau émetteur (10) formé d'une pluralité d'unités d'émission, consistant chacune en une source de lumière (11), lesdites sources de lumière étant connectées respectivement à des lignes d'abonné entrantes (12) et étant disposées sous forme de matrice dans ledit tableau émetteur; un tableau récepteur (40) formé d'une pluralité d'unités de réception (41), consistant chacune en une pluralité de cellules opto-électroniques, lesdites cellules étant sélectivement connectables à des lignes d'abonné sortantes (42) et étant disposées sous forme de matrice dans ladite unité de réception; un système optique adapté pour projeter l'image du tableau émetteur sur les unités de réception et amener, dans chaque unité de réception, les images des sources du tableau émetteur en coïncidence avec les cellules opto-électroniques desdites unités de réception, une cellule opto-électronique étant ainsi activée par une source de lumière illuminée; caractérisé en ce qu'il comprend en outre: dans chaque unité de réception des moyens (406, 406') pour illuminer les unités de tableau émetteur quand une de leurs cellules opto-électroniques est activée; et une unité de supervision (60) composée de cellules opto-électroniques (62) sur laquelle sont projectées les unités de réception.

2. Réseau de commutation opto-électronique conforme à la revendication 1, caractérisé en ce que les unités de réception comprennent un tube de visée (401) recouvert intérieurement d'une couche réfléchissante et des moyens d'illumination de ladite unité de réception commandés par l'activation des cellules opto-électroniques de l'unité de réception.

3. Réseau de commutation opto-électronique conforme à la revendication 1, dans lequel les lignes d'abonné entrantes et sortantes sont des fibres optiques, caractérisé en ce que les unités de réception comprennent des moyens d'illumination d'unité de réception (403) commandés par l'activation des cellules opto-électroniques de l'unité de réception et un guide d'onde lumineux (404), lesdits moyens d'illumination fournissent de la lumière à la fois aux fibres optiques sortantes et au guide d'onde lumineux.

4. Réseau de commutation opto-électronique conforme à la revendication 1, dans lequel les lignes d'abonné entrantes et sortantes sont des lignes métalliques, caractérisé en ce que les unités de réception comprennent des moyens d'illumination (406'), d'unités de réception commandés par l'activation des cellules opto-électroniques de l'unité de réception, lesdites cellules alimentent à la fois la ligne d'abonné sortante et les moyens d'illumination.

5. Réseau de commutation opto-électronique conforme à la revendication 1, caractérisé en ce que le tableau récepteur est divisé en une pluralité de sous-tableaux récepteurs et en ce qu'il comporte des moyens semi-réfléchissants (82) de division du flux lumineux émis par le tableau émetteur auxquels peuvent être ajoutés des moyens réfléchissants (81) disposés de telle sorte que chacun des sous-tableaux récepteurs et l'image du tableau émetteur à travers les réflecteurs associés aient le même axe.

## Patentansprüche

1. Optoelektronisches Schaltnetzwerk mit einer Sendetafel (10), welche eine Vielzahl von Sendeeinheiten aufweist, von denen jede eine Lichtquelle (11) enthält, wobei die Lichtquelle jeweils an die eingehenden Teilnehmerleitungen (12) angeschlossen und in Form einer Matrix auf der Sendetafel (10) angeordnet sind, mit einer Empfängertafel (40) mit einer Vielzahl von Empfangseinheiten (41), deren jede aus einer Vielzahl optoelektronischer Zellen besteht, welche selektiv mit den ausgehenden Teilnehmerleitungen (42) verbindbar sind und in Form einer Matrix auf der Empfängertafel angeordnet sind, mit einem optischen System, welches das Bild der Sendetafel auf die Empfangseinheiten projiziert und in jeder Empfangseinheit die Bilder der Lichtquellen der Sendetafel in Koinzidenz mit den optoelektronischen Zellen der Empfangseinheiten erzeugt, so dass eine optoelektronische Zelle durch eine leuchtende Lichtquelle aktiviert wird, dadurch gekennzeichnet, dass in jeder Empfangseinheit Mittel (406, 406') zum Beleuchten der Empfangseinheiten vorgesehen sind sobald eine ihrer optoelektronischen Zellen aktiviert ist und dass eine aus optoelektronischen Zellen (62) zusammengesetzte Kontrolleinheit vorgesehen ist, auf welche die Empfangseinheiten projiziert sind.

2. Optoelektronisches Schaltnetzwerk nach Anspruch 1, dadurch gekennzeichnet, dass die Empfangseinheiten ein innen mit einer reflektierenden Schicht bedecktes Visierrohr (401) und Mittel zum Beleuchten der Empfangseinheit aufweisen, welche durch die Aktivierung der optoelektronischen Zellen der Empfangseinheit gesteuert sind.

3. Optoelektronisches Schaltnetzwerk nach Anspruch 1, in dem die eingehenden und ausgehenden Teilnehmerleitungen optische Fasern sind, dadurch gekennzeichnet, dass die Empfangseinheiten durch die Aktivierung der optoelektronischen Zellen der Empfangseinheit gesteuerte Mittel zum Beleuchten der Empfangseinheit sowie einen Lichtwellenleiter (404) aufweisen, wobei die Beleuchtungsmittel das Licht gleichzeitig in die ausgehenden optischen Fasern und den Lichtwellenleiter abgeben.

4. Optoelektronisches Schaltnetzwerk nach Anspruch 1, in dem die eingehenden und ausgehenden Teilnehmerleitungen metallische Leitungen sind, dadurch gekennzeichnet, dass die Empfangseinheiten durch die Aktivierung der optoelektronischen Zellen der Empfangseinheit gesteuerte Mittel zum Beleuchten (406') der Empfangseinheiten aufweisen, wobei die Zellen zugleich die ausgehende Teilnehmerleitung und die Mittel zur Beleuchtung versorgen.

5. Optoelektronisches Schaltnetzwerk nach Anspruch 1, dadurch gekennzeichnet, dass die Empfängertafel in eine Vielzahl von Empfängertafel-Abschnitte unterteilt ist und, dass halbreflektierende Mittel den von der Sendetafel abgegebenen Lichtstrom teilen, wobei den halbreflektierenden Mitteln derart angeordnete reflektierende Mittel (81) hinzugefügt sein können, dass jeder der Empfängertafel-Abschnitte und das Bild der Sendetafel auf den zugeordneten Reflektoren die gleiche Achse haben.

## Claims

1. Opto-electronic switching network comprising an emitter board (10) including a plurality of emitter units each consisting in a light source (11), said light sources being respectively connected to incoming subscribers lines and being arranged in matrix form in said emitter board;

a receiver board (40) including a plurality of receiver units (41) each consisting in a plurality of opto-electronic cells, said cells being selectively connectable to outgoing subscriber lines (42) and being arranged in matrix form in said receiver unit;

an optical system arranged for projecting the emitter board image onto the receiver units and bringing in each receiver unit the images of the light sources of the emitter board into coincidence with the opto-electronic cells of said receiver units, an opto-electronic cell being thus activated by an illuminated light source;

characterized in that it further comprises:

in each receiver unit, means (406, 406') for illuminating the receiver units when one of the opto-electronic cells thereof is activated; and

a supervision unit (60) formed of opto-electronic cells (62) onto which the receiver units are projected.

2. Opto-electronic switching network as set forth in claim 1, characterized in that the receiver units comprise a sight tube (401) internally coated with a reflecting layer and means for illuminating said receiver unit controlled by the activation of the opto-electronic cells of the receiver unit.

3. Opto-electronic switching network as set forth in claim 1, wherein the incoming and outgoing subscriber lines are optical fibres, characterized in that the receiver units comprise means for illuminating the receiver units (403) controlled by the activation of the opto-electronic cells of the receiver units and a light waveguide (404), said illuminating means providing light at the same time to the outgoing optical fibres and the light waveguide.

4. Opto-electronic switching network as set forth in claim 1, wherein the incoming and outgoing subscriber lines are metal wires, characterized in that the receiver units comprises means (406') for illuminating the receiver units controlled by the activation of the opto-electronic cells of the receiver units, said cells feeding at the same time the outgoing subscriber line and the illumination means.

5. Opto-electronic switching network as set forth in claim 1, characterized in that the receiver board is split into a plurality of receiver sub-boards and in that it comprises semi-reflecting means (82) for dividing the light flux emitted by the emitter board to which may be associated reflecting means (81) arranged in such a way that each of the receiver sub-boards and the emitter board image through the associated reflecting means have a common axis.

**FIG.1**

FIG.1 — Schéma bloc. Éléments: RECONNAISSANCE D'ADRESSE (24), COMMANDE (25), CCT COMMUTATION (26), 21A, 22B, 23A, 23B, 20, 21B, 21C, 21D, 21F, 22A, 12B, 12A, A, B, projetée sur 21A, projette 10, 3A, 3B, 3C, 3D, 3F, 10, 11A, 11B, 11C, 11D, 11T, 11N, 13A, 13B, GÉNÉRATEUR DE TONALITÉS (15), GÉNÉRATEUR DE NUMEROTATION (14), COMMANDE CENTRALE (51), ENREGISTREUR (52), TRADUCTEUR (53), MEMOIRE D'ETAT (54), COMMANDE (55), 56, 57, 58, 59, 22F.

FIG.2

0 085 633

# FIG.3

# FIG.4